(19) **Europäisches Patentamt / European Patent Office / Office européen des brevets**

(11) **EP 1 263 179 B1**

(12) **EUROPEAN PATENT SPECIFICATION**

(45) Date of publication and mention
of the grant of the patent:
**27.06.2007 Bulletin 2007/26**

(51) Int Cl.:
*H04L 25/02* (2006.01)  *H04B 7/005* (2006.01)
*H04B 7/26* (2006.01)

(21) Application number: **01304707.1**

(22) Date of filing: **29.05.2001**

(54) **Channel estimation for a CDMA system using coded control symbols as additional pilot symbols**

Kanalschätzung in einem CDMA-System mit codierten Steuersymbolen als zusätzlichen Pilotsymbolen

Estimation de canal dans un système CDMA utilisant des symboles de service codés comme symboles pilotes supplémentaires

(84) Designated Contracting States:
**DE FR GB**

(43) Date of publication of application:
**04.12.2002 Bulletin 2002/49**

(73) Proprietor: **LUCENT TECHNOLOGIES INC.
Murray Hill, New Jersey 07974-0636 (US)**

(72) Inventors:
• **Bachl, Rainer Dr.
90425 Nürnberg (DE)**
• **Gerstacker, Wolfgang Helmut Dr.
90482 Nürnberg (DE)**

• **Rau, Richard Dr.
90489 Nürnberg (DE)**

(74) Representative: **Sarup, David Alexander et al
Alcatel-Lucent Telecom Limited
Unit 18, Core 3,
Workzone
Innova Business Park
Electric Avenue
Enfield, EN3 7XU (GB)**

(56) References cited:
EP-A- 1 067 730      WO-A-00/36760
WO-A-00/60762      WO-A-99/65171

**Description**

The invention relates to a method for the reception of signals according to the 3GPP CDMA standard and to a receiver for the reception of signals according to the 3GPP CDMA standard.

As known, in multiple access communication systems several separate links (i.e. dedicated connections via some media (e.g. electromagnetic waves) respectively between two devices for the exchanging of information (e.g. data)) between different distinct sources and one or several distinct destinations can coexist. Such communication systems must therefore be designed to keep the interference between the links at a minimum so that the transmitted information of a particular link can be retrieved on the receiver side. Several multiple access techniques for wireless communication systems have been devised in the last few decades, as for example techniques separating the links by assigning non-overlapping time-slots to each link (Time Division Multiple Access) or by assigning non-overlapping frequency bands to each link (Frequency Division Multiple Access).

Systems of a third generation, particularly mobile communication systems following the 3GPP (3rd Generation Partnership Project) standard, employ wideband CDMA (Code Division Multiple Access) techniques for data transmission. On the transmitter side the user data is source encoded for transmission error protection. Usually, the transmission channel between the transmitter and receiver leads to significant distortions of the sent signal and to signal degradations due to additive noise. Thus, in order to minimise the rate of bit errors after decoding on the receiver side, the channel properties need to be estimated and compensated in the receiver to minimise their impact.

Since the transmission channel is time-variant, channel estimation has to be performed continuously. To facilitate channel estimation, pilot blocks, i.e. blocks of data symbols known a priori by the receiver, may be transmitted within a link in regular intervals in a specific control channel, such as for example in uplink direction with the data stream going from a mobile station to a base station of a mobile communication systems following the 3GPP standard.

It holds in general that the larger the ratio of pilot symbols to non-pilot symbols is in such control channel, the better channel estimates can be obtained. This in turn leads to a smaller bit error rate (BER), which implies that either fewer data blocks need to be retransmitted or the transmission power can be reduced.

However, according to the 3GPP standard, the number of pilot bits is fixed by that standard and depends on the link mode, such as on an uplink mode or downlink mode. For instance, since the structure of a so-called DPCCH (Dedicated Physical Control Channel) carrying physical layer control information between two separate devices of the system may vary with a respective uplink mode, also the number of pilot symbols embedded therein can vary between a minimum and a maximum number and hence, the quality of channel estimates obtained with a pilot aided channel estimator depends on that respective uplink mode of the system as well. To compensate a poorer quality of channel estimates in case of less than the maximum number of pilot symbols are transmitted, the power of the transmitted signal needs to be increased. Since, however, in a CDMA system each link constitutes interference in all other links within the same cell, a higher transmission power unfortunately increases the overall interference level, which in turn has a negative effect on the overall capacity of the system.

A possible improvement of the channel estimates could be achieved by applying a so called data aided channel estimation technique. As known, this generic class of algorithms can be applied to any transmission system that requires channel information on a receiver side. However, data aided channel estimators are iterative procedures. First a rough estimate of the channel estimates is computed. Subsequently, based on these estimates the data contained in the received signal is compensated and the transmitted data symbol stream is estimated. Although these estimated symbols normally contain errors, it is assumed that they are correct to be used in a second iteration as pilot bits.

Thus, if the number of errors is small enough, the newly computed channel estimates will improve and, as a consequence, the new estimation of the transmitted data will contain fewer bit errors. These iterations can be repeated until the channel estimates and the estimated data sequence converge to some final estimates. Accordingly, in terms of quality of estimation, data aided techniques may be superior to purely pilot aided estimators, since ideally the whole signal serves as pilot symbols.

On the other side, if there are too many bit errors contained in the initial estimates the iterations, however, can diverge.

Moreover, in terms of implementation, data aided estimation techniques have at least the following drawbacks.

Since each iteration introduces an additional delay into the system, problems are posed in communication systems with tight overall delay constraints. Furthermore, any additional delay requires additional buffers, which usually result in a significant drawback in systems operating at high data rates and serving large numbers of users simultaneously.

Moreover, the computational complexity of data aided techniques tends to be considerably higher than purely pilot aided estimators. Usually, the computational complexity is increasing at least linearly with the number of iterations. An increased computational complexity, however, has a direct impact on the complexity of the required hardware and firmware and, consequently, on the costs of the product.

In contrast thereto, in the hardware and firmware design of receivers particularly incorporated in base-stations or mobile stations of wireless communication systems following the 3GPP standard one of the major constraints is a small computational complexity of channel estimation algorithms.

As a consequence, advanced data aided techniques are not an option and purely pilot aided techniques are employed involving the problems as discussed above.

An object of the invention is to provide an improved mechanism for increasing the quality of channel estimation for CDMA-systems, especially for systems following the 3GPP standard, by simultaneously ensuring a low complexity.

The inventive solution is achieved by a method, a receiver and an implementation software incorporating the features of claim 1, 10 and 14, respectively. Advantageous and/or preferred refinements and/or embodiment are subject-matter of the dependent claims.

Accordingly, the invention proposes and uses a technique for improving pilot based channel estimation by exploiting the particular properties of the structure according to the 3GPP standard and particularly is concerned with modes that do employ control symbols.

By using coded control symbols as additional pilot symbols for the reception of signals encoded according to the 3GPP wideband CDMA standard the amount of symbols used as pilot symbols is increased resulting in an improved channel estimation. Consequently, the capacity of the overall communication system is increased, the required energy for transmission can be reduced and a longer battery life of mobile terminals are ensured.

According to a preferred embodiment, it is proposed to use coded control symbols which are transmitted in the dedicated physical control channel (DPCCH) of the 3GPP wideband CDMA transmission channel.

Advantageously, the coded control symbols comprise data from the transport format combination indicator (TFCI) of the dedicated physical control channel (DPCCH), since there is a unique mapping from a TFCI to the associated TFCI bits. The TFCI can be re-encoded at the receiver site to obtain the transmitted TFCI bits to be used as an additional pilot symbol for the channel estimation for the DPDCH.

Preferably the invention is implemented within a rake receiver, having means for re-encoding decoded control symbols and using said re-encoded control symbols as additional pilot symbols said means comprising a TFCI encoder. Further it is suggested that said means for re-encoding decoded control symbols are associated with a channel estimation unit.

Accordingly, it is further proposed that the TFCI bits are decoded at the end of each DPCCH frame and the most likely transmitted TFCI is determined and re-encoded for using as additional pilot symbols. Moreover, an estimation of properties of the 3GPP wideband CDMA transmission channel is based on transmitted pilot symbols and said additional pilot symbols, wherein said estimation of properties preferably is an estimation of properties of the dedicated physical data channel (DPDCH).

According to further preferred refinements the estimation is an estimation using a pilot and data aided channel estimation and/or an estimation of a frequency offset between a transmitter, such as of a base transmitting station and a receiver, such as of a mobile station based on transmitted pilot symbols and said additional pilot symbols.

Thus, by exploiting the particular structure of the control channel in a 3GPP uplink or downlink to generate additional pilot symbols for pilot aided channel estimation, the additional pilot bits can be used to improve the channel estimates for compensating the channel in system.

Moreover, since the invention is not involving an iterative algorithm, there is no significant additional delay or additional uncertainty introduced into the system and an additional computational complexity is very small. Consequently, the overall performance is predictable and the quality of the channel estimates is identical to one obtained with two additional pilot bits.

The invention is described in more detail below, in particular on the basis of preferred embodiments and with reference to the attached drawings, in which:

Fig. 1    schematically shows a rake finger of a receiver for a 3GPP uplink employing TFCI-bits as additional pilot bits,

Fig. 2    schematically shows an exemplar modulator for dedicated physical channels in the uplink,

Fig. 3    depicts a frame structure for DPDCH and DPCCH in the uplink,

Fig. 4    depicts exemplar modes with possible combinations of DPCCH fields, and

Fig. 5    schematically shows a rake finger of a receiver for a 3GPP uplink according to prior art, purely employing pilot aided channel estimation.

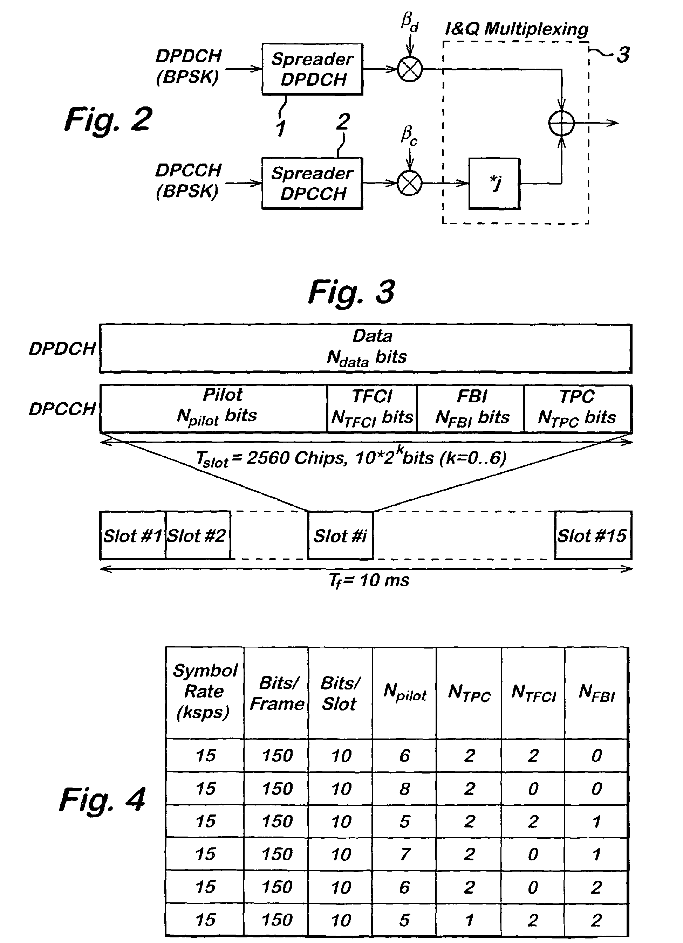

For an easier understanding of the invention, reference firstly being made to Fig. 2 schematically depicting for exemplar reasons only a modulator for dedicated physical channels in the uplink of mobile communication systems following the 3GPP standard employing CDMA techniques, in particular WDCMA (Wideband Code Division Multiple Access),for data transmission.

As known for a person skilled in the art, CDMA techniques particularly used in multiple access communication systems following the 3GPP standard are designed to achieve separability of the respective information of different links not by assigning non-overlapping time-slots or frequency bands to each link but by introducing redundancy into the transmitted signals that makes them mutually orthogonal in the ideal case. Hence, the transmitted information of one link can be separated from all other ones by projecting the received signal onto a set of basis functions that are associated with this link. The operation for introducing the redundancy is called spreading. In this operation each symbol of the logic transmission channel is modulated with a so called channelization code, which is unique for this data stream and which is known to the receiver. All channelization codes are mutually orthogonal. The operation of detection and separation is called despreading. In this operation the received signal is correlated with the channelization code associated with the link of interest. Due to the orthogonality of the channelization codes the transmitted signals of all other links are largely suppressed and cause a noise floor, which is called interference noise.

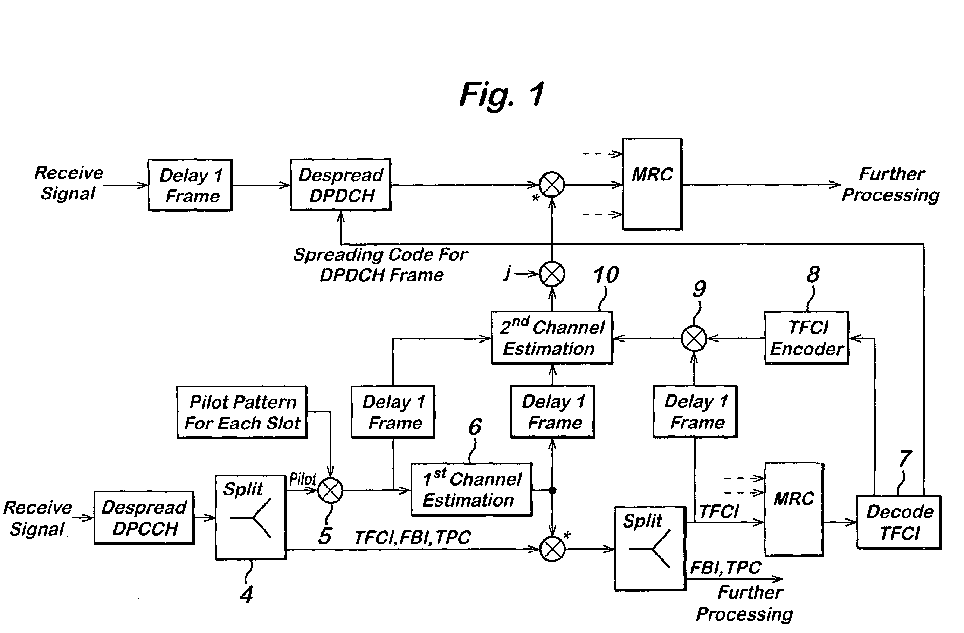

In the exemplar uplink according to the 3GPP standard and as depicted in Fig. 1, there are two types of uplink dedicated physical channels, the uplink Dedicated Physical Data Channel DPDCH and the uplink Dedicated Physical Control Channel DPCCH. For the following description, the bit streams of the two channels will be denoted as $x_{DPDCH}$ (m) and $x_{DPCCH}$(m), respectively, being BPSK (Binary Phase Shift Keying) streams with the index m based on the specific discrete time domain. While the data rate in the DPCCH is fixed by the 3GPP standard, the data rate in the DPDCH is decided at the link set-up and can vary dynamically during transmission in certain uplink modes. The DPDCH and the DPCCH are spread by the spreader 1 and 2 with different channelization codes and are then I/Q (In-phase/Quadrature)-code multiplexed by unit 3 into one physical stream as shown in Fig. 2. (As known, in-phase/quadrature denote the real and the imaginary part of the baseband representation of a bandpass signal). Additionally, the parameters $\beta_d$ and $\beta_c$ adjust the relative power between the DPDCH and the DPCCH.

In the uplink, dedicated data, generated at higher layers, e.g. data of a telephone conversation, is passed to layer 1, i.e. to the physical layer through so-called transport channels, which are special types of logic channels in the 3GPP standard, as known. Several transport channels are then commonly time-multiplexed onto one uplink DPDCH. Depending on the mode of the system, the data rate and other parameters of each transport channel can vary over the duration of one uplink. For the following description the properties of a respective DPDCH, i.e. its current data rate, the rate of each multiplexed transport channel, etc., are referred-to in general as DPDCH state.

The set of all permissible DPDCH states for a particular DPDCH is negotiated by higher layer functions between two devices assigned to the system, i.e. with regard to the preferred example between a mobile terminal, e.g. a cellular telephone, and a base-station when the link is established therebetween and whenever a new transport channel is added. It is called the Transport Format Combination TFC set and can be understood as a look-up table, where each entry denotes one DPDCH state.

The uplink DPCCH is used to carry control information generated at layer 1. This control information usually consists of known pilot bits to support channel estimation for coherent detection, transmit power-control commands TPC, feedback information FBI, and an optional transport-format combination indicator TFCI.

The continuous data stream of the I/Q multiplexed DPDCH and DPCCH is formatted into frames of equal duration 10ms. The DPDCH state is constant within each frame, but can change between frames. Fig. 3 shows such a frame structure of uplink dedicated physical channels.

Using that exemplar frame structure, the inventive approach exploits the particular properties of the optional transmitted TFCI bits in the DPCCH to then increase the number of pilot bits as subsequently described in detail.

As can be seen in Fig. 3, each frame defining the data format within a block of fixed length and serving as a basic transmission unit is subdivided into 15 slots. There are 10 symbols in each DPCCH slot. The number of DPDCH symbols per slot depends on the DPDCH state. The number of symbols for the different uplink DPCCH fields ($N_{pilot}$, $N_{TPC}$, $N_{FBI}$, and $N_{TFCI}$) depends on the uplink mode and is fixed for the duration of one uplink. For exemplar modes, possible constellations are listed in a table as depicted in Fig. 4. Obviously, the length of the pilot block $N_{pilot}$ can vary between 5 and 8 bits per slot.

Furthermore, as mentioned above, the TFC may be understood as a look-up table, where each entry is denoting one DPDCH state. Based thereon, the transport-format combination indicator TFCI can be understood as a pointer into that TFC look-up table. Hence, it informs the receiver about the DPDCH state in the same frame. For each entry in the TFC look-up table there is one TFCI. Depending on the length of the look-up table, the TFCIs can be represented with at most 10bits.

In order to ensure robust transmission, the TFCIs preferably are block encoded with a punctured Reed-Mueller code before transmission, i.e. each TFCI is mapped to one code-word of length 30bits as known for a person skilled in the art. The bits of these TFCI code-words will be referred to as TFCI bits. The thirty encoded TFCI bits are divided evenly among the fifteen time slots of each frame, i.e. two bits per slot, as can be seen in the table of Fig. 4. The introduced redundancy in the Reed-Mueller code allows the reconstructing, i.e. the decoding of transmitted TFCI, even if a certain number of TFCI bits were received with errors.

Since the particular details of Reed-Mueller encoding and decoding usable with the invention may vary and in general are known by a person skilled in the art, the Reed-Mueller code is not discussed in detail for the following description. Moreover, it has to be noted, that the constellations as depicted in the table of Fig. 4 are not finally and already today other possible modes exist, such as for example modes involving a $N_{pilot}$ having a length with a minimum number of 3 bits per slot and a $N_{TFCI}$ having a length up to 4 bits per slot.

Based on Fig. 4, the invention increases the number of pilot bits $N_{pilot}$ in case of transmitted TFCI by two to a minimum of seven pilot bits per slot.

However, since a receiver usually does not know the binary information of each transmitted TFCI bit, when it is received, a TFCI bit can not be used as a pilot bit per se. Thus the following two properties of the TFCI bits are exploited:

Firstly, the 30 TFCI bits per frame, i.e. two per slot with 15 slots per frame, make up a code-word of a punctured Reed Muller code.

Secondly, a frame of the DPDCH can only be despread and processed after the TFCI code-word of the associated DPCCH frame has been decoded and the properties of the DPDCH frame has been determined from the TFC look-up table.

The decoding of the TFCI code-word may result in a code-word which is either correctly or not correctly decoded.

If the TFCI code-word is decoded incorrectly, the information embedded in the TFCI code-word can not be recovered. However, since the TFCI decoding algorithm can not determine, whether the decoded TFCI is error free, the system progresses as if the obtained TFCI indicates the proper DPDCH state of this frame. Hence, the wrong channelization code, rate matching and/or multiplexing parameters are applied to the current DPDCH frame and the whole data of this DPDCH frame will be lost as a consequence. This failure will be detected in a subsequent Cyclic Redundancy Check (CRC). Higher layer functions will then request that this frame will be retransmitted. Such a loss of information substantially happens irrespective of the quality of the channel estimates for the DPDCH.

If the TFCI code-word, however, is decoded correctly, the embedded TFCI information is known and the DPDCH state of this frame can be determined correctly. In this case better channel estimates for the DPDCH will lead to lower BERs (Bit Error Rate). Since there is a unique mapping from a TFCI to the associated TFCI bits, the TFCI can be re-encoded at the receiver site to obtain the transmitted TFCI bits in this frame. As a consequence, each TFCI bit can now be used as an additional pilot symbol for the channel estimation for the DPDCH.

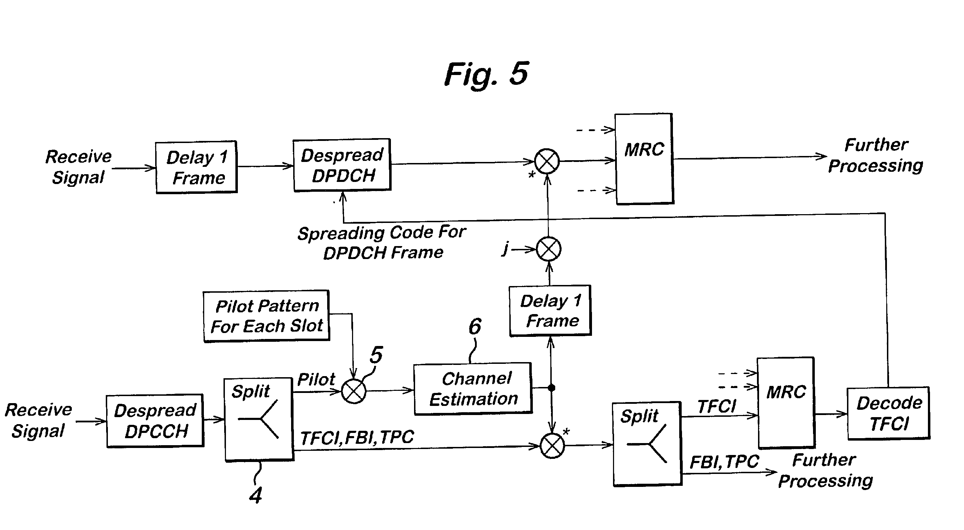

The inventive approach is preferably implemented in an exemplar rake receiver involving L parallel processing units called rake fingers and having means for applying maximal ratio combining MRC. One such rake finger of a rake receiver using the inventive approach is schematically depicted in Fig. 1, whereas Fig. 5 is depicting a rake finger according to prior art without using the inventive approach.

The rake receiver is used preferably, since a typical channel model applicable for WCDMA systems is a discrete wide sense stationary uncorrelated scattering (WSSUS) channel model for which the received signal is represented by the sum of delayed replicas of the input signal weighted by independent zero-mean complex Gaussian time variant processes.

Specifically, if $x(t)$ and $y(t)$ denote the equivalent complex baseband representations of the channel input and output, respectively, then

$$y(t) = \sum_{l=1}^{L} \hat{h}_l(t) x(t - \tau_l) + \hat{n}(t), \qquad \text{equation (1)}$$

where $\hat{h}_l(t)$ is a complex Gaussian process weighting the $l$th replica. The power spectrum of $\hat{h}_l(t)$, called the Doppler spectrum of the $l$th path, controls the rate of fading for the $l$th path. The Doppler spectrum depends on the fading environment. Its bandwidth is determined by the maximal Doppler spread $f_D$. The term $\hat{n}(t)$ represents white Gaussian zero mean noise, which models the interference due to other users and additional thermal noise in the receiver.

After applying a receive filter based on the rake receiver and descrambling and despreading for the DPCCH in one rake finger associated with one multipath of the rake-receiver the obtained discrete signal can be written in the form

$$y_{l,DPCCH}(m) = h_l(m) x_{DPCCH}(m) + n(m), \qquad \text{equation (2)}$$

$$y_{l,DPDCH}(m) = h_l^*(m) x_{DPDCH}(m) + n(m),$$

where $x_{DPCCH}(m)$ and $x_{DPDCH}(m)$, as mentioned above, are the BPSK symbol streams of the DPCCH and the DPDCH, respectively. The signal n(m) denotes an equivalent white Gaussian noise source.

One objective of the receiver is to estimate $x_{DPCCH}(m)$ and $x_{DPDCH}(m)$ from the received $y_{DPCCH}(m)$ and $y_{DPDCH}(m)$. This objective usually is split into two major stages. The first stage processes $y_{DPCCH}(m)$ and $y_{DPDCH}(m)$ in order to minimize the effects of $h_l(m)$ and $n(m)$. This stage is referenced as preprocessing. The second stage employs error correction decoding to estimate the originally sent binary symbol stream.

It is well established that an optimal preprocessing computes

$$\hat{y}_{DPCCH}(m) = \sum_{l=1}^{L} h_l^*(m) y_{l,DPCCH}(m) \quad \text{and} \qquad \text{equation (3)}$$

$$\hat{y}_{DPDCH}(m) = \sum_{l=1}^{L} h_l(m) y_{l,DPDCH}(m),$$

as disclosed for example by John G. Proakis, "Digital Communication", Mc Graw-Hill Book Company, 1989.

Each of the rake fingers of a rake receiver approximating this preprocessing computes one of the summing terms of equations equation (3). However, equation (3) requires, that the channel transfer function $h_l(m)$ is known in the $l$th rake finger, wherein a wide variety of techniques has been proposed for estimating the $h_l(m)$.

Regarding Fig. 5 for comparing reasons, a possible implementation of a rake finger according to prior art is shown. The prior rake receiver employs one of the most common class of channel estimation algorithms called pilot aided techniques, i.e. channel estimation algorithms that are based on the transmitted pilot symbols, which are known a priori by the receiver.

The receiver according to Fig. 5 may remove the known pilot bits from the received data. It obtains thus an observation of the transmission channel degraded by additive noise. Since the channel transfer functions $h_l(m)$ in WCDMA systems are narrowband signals, when sampled at the symbol rate, the channel estimates can be improved by some form of lowpass filtering. The structure of the rake finger as depicted, takes the particular properties of the exemplar 3GPP uplink into account, i.e. the fact that the pilot bits are multiplexed with other control information in the DPCCH. After separating the part of the received data at the pilot bit locations from the one at the other control bit locations by the unit 4 of Fig. 5, the pilot bit information is removed by a simple multiplication operation 5 using the known pilot pattern for each slot. The resulting signal is then an actual observation of the channel, which is fed into a channel estimation device 6. The particular algorithm used for the channel estimator 6 is adapted to specific system constraints, as known by a person skilled in the art but of no significance for the invention. The delay of the DPDCH by one frame, as depicted in Fig. 5, is due to the TFCI bits that can only be decoded after a whole frame has been received. Based on the structure of the prior rake receiver according to Fig. 5, the rake finger of an improved rake receiver incorporating the inventive approach is shown in Fig. 1, whereby similar or equally acting means with regard to Fig. 5 are referenced with the same reference signs. The inventive receiver according to Fig. 1 works in contrast to the prior rake receiver according to Fig. 5 as follows:

At the end of each DPCCH frame, the 30 TFCI bits of the frame are decoded and the most likely transmitted TFCI is determined. A modified decoding device 7 provides as an output not only the DPDCH state parameters for processing the DPDCH frame, but also the obtained TFCI.

The TFCI is then fed into a TFCI encoder 8, which is identical to a TFCI encoder used on the transmitter side, for example in the mobile station and which is defined in the 3GPP standard. The TFCI encoder 8 produces as an output the 30 TFCI bits associated with this TFCI.

Subsequently, in a following multiplication operation 9, the obtained TFCI bits are used to remove the TFCI bit information from the received data. This operation may be compared to the removing process 5 of the pilot data, as discussed above.

The obtained data is then fed into a second channel estimation device 10. Other inputs to the second channel estimation device 10 can be the pilot information of this DPCCH frame and/or the channel estimates from the first channel estimation device 6. The new channel estimates provided by the second channel estimation device 10 are used to compensate the DPDCH data stream.

As mentioned above, if the TFCI is decoded with errors, the TFCI bit information is not removed from the received data correctly. As a result the quality of the channel estimates produced by the second channel estimation block deteriorates and can actually be worse than the one from the first channel estimator. However, as was discussed before, this frame of data is lost anyway irrespective of the quality of the channel estimates.

If, however, the TFCI is decoded correctly, then there is no qualitative difference between the input from the pilot bits and from the TFCI bits to the second channel estimator 10 and the quality of computed channel estimates is, as if we had additional pilot bits in the system.

The additional numerical complexity of this improved channel estimation scheme can be kept small. The means 8 for the TFCI encoding may be realized as a simple lookup-table and has, thus, negligible numerical complexity and delay. The second channel estimator 10 can be designed in different ways:

According to a first way, a completely new channel estimate may be computed from the initial pilot symbols and the newly generated channel information from the TFCI bits. This approach however, has a high computational complexity.

Thus, according to the preferred embodiment of Fig. 1 of the invention, the channel estimates from the means 6 for the first channel estimation are improved by using the additional data from the TFCI processing. Since most channel estimation techniques are linear operations, an update algorithm can easily be designed. Furthermore, the first and second channel estimation devices 6 and 10 can be designed such that their overall complexity is not larger than a comparable channel estimator for 8 pilot bits.

Accordingly, due to the invention the channel estimates for compensating the DPDCH are improved in the relevant cases. Hence, to obtain a certain target BER at the receiver the transmitted energy per DPDCH bit can be reduced, while the energy of the DPCCH bits has to stay the same. This reduction of transmit energy in the DPDCH can be achieved on the transmitter side by reducing the factor $\beta_d$ in Fig. 2 accordingly. As pointed out before, reduced transmitter energy leads to decreased interferences and as a consequence to a higher capacity of the overall system additionally resulting in a longer battery life of a mobile terminal.

It has to be noted, that even if the invention is described with respect to a preferred embodiment mainly for an uplink, it is obvious for a person skilled in the art, that the invention also can be used for downlink and several modifications in dependence on specific system constraints are possible without departing the protective scope of invention.

## Claims

1. Method for reception of signals encoded according to the 3GPP wideband CDMA standard **characterized by** using being coded control symbols (TFCI) contained in the received signal as additional pilot symbols (Pilot) for the reception.

2. Method according to claim 1 **characterized in that** said coded control symbols (TFCI) are transmitted in the dedicated physical control channel (DPCCH) of the 3GPP wideband CDMA transmission channel.

3. Method according to claim 1 or 2 **characterized in that** said coded control symbols are comprising data from the transport format combination indicator (TFCI) of the dedicated physical control channel (DPCCH) of the 3GPP wideband CDMA transmission channel.

4. Method according to one of claims 1 to 3 **characterized in that** each transmitted transport format combination indicator (TFCI) bit is re-encoded and used as an additional pilot symbol.

5. Method according to one of claims 1 to 4 **characterized in that** the transport format combination indicator (TFCI) bits are decoded at the end of each dedicated physical control channel (DPCCH) frame and the most likely transmitted transport format combination indicator (TFCI) is determined and re-encoded for using as additional pilot symbols.

6. Method according to one of claims 1 to 5 **characterized in that** an estimation of properties of the 3GPP wideband CDMA transmission channel is based on transmitted pilot symbols and said additional pilot symbols.

7. Method according to claim 6 **characterized in that** said estimation of properties of the 3GPP wideband CDMA transmission channel is an estimation of properties of the dedicated physical data channel (DPDCH).

8. Method according to one of claims 1 to 7 **characterized in that** an estimation of a frequency offset between a transmitter of a base transmitting station and a receiver of a mobile station is based on transmitted pilot symbols and said additional pilot symbols.

9. Method according to one of claims 5 to 7 **characterized in that** said estimation is an estimation using a pilot and data aided channel estimation.

10. Receiver for reception of signals encoded according to the 3GPP wideband CDMA standard **characterized by** means (7, 8, 9, 10) for using coded control symbols contained in the received signal as additional pilot symbols.

11. Receiver according to claim 10 **characterized in that** the receiver is a rake receiver.

12. Receiver according to claim 10 or 11 **characterized by** means (8, 9, 10) for re-encoding decoded control symbols and using said re-encoded control symbols as additional pilot symbols said means comprising a TFCI encoder (8).

13. Receiver according to claims 10, 11 or 12 **characterized in that** said means (8) for re-encoding decoded control symbols are associated with a channel estimation unit (10).

14. A computer program adapted to perform the method of any of claims 1 to 9, especially in a receiver of any of claims 10 to 12.

**Patentansprüche**

1. Verfahren zum Empfang von gemäß dem 3GPP-Breitband-CDMA-Standard codierten Signalen, **gekennzeichnet durch** Verwendung von in dem Empfangssignal enthaltenen codierten Steuersymbolen (TFCI) als zusätzliche Pilotsymbole (Pilot) für den Empfang.

2. Verfahren nach Anspruch 1, **dadurch gekennzeichnet, daß** die codierten Steuersymbole (TFCI) in dem fest zugeordneten physischen Steuerkanal (DPCCH) des 3GPP-Breitband-CDMA-Übertragungskanals gesendet werden.

3. Verfahren nach Anspruch 1 oder 2, **dadurch gekennzeichnet, daß** die codierten Steuersymbole Daten aus dem Transportformat-Kombinationsindikator (TFCI) des fest zugeordneten physischen Steuerkanals (DPCCH) des 3GPP-Breitband-CDMA-Übertragungskanals umfassen.

4. Verfahren nach einem der Ansprüche 1 bis 3, **dadurch gekennzeichnet, daß** jedes gesendete Bit des Transportformat-Kombinationsindikators (TFCI) umcodiert und als zusätzliches Pilotsymbol verwendet wird.

5. Verfahren nach einem der Ansprüche 1 bis 4, **dadurch gekennzeichnet, daß** die Bit des Transportformat-Kombinationsindikators (TFCI) am Ende jedes Rahmens des fest zugeordneten physischen Steuerkanals (DPCCH) decodiert werden und der am wahrscheinlichsten gesendete Transportformat-Kombinationsindikator (TFCI) bestimmt und zur Verwendung als zusätzliche Pilotsymbole umcodiert wird.

6. Verfahren nach einem der Ansprüche 1 bis 5, **dadurch gekennzeichnet, daß** eine Schätzung von Eigenschaften des 3GPP-Breitband-CDMA-Übertragungskanals auf gesendeten Pilotsymbolen und den zusätzlichen Pilotsymbolen basiert.

7. Verfahren nach Anspruch 6, **dadurch gekennzeichnet, daß** die Schätzung von Eigenschaften des 3GPP-Breitband-CDMA-Übertragungskanals eine Schätzung von Eigenschaften des fest zugeordneten physischen Datenkanals (DPCCH) ist.

8. Verfahren nach einem der Ansprüche 1 bis 7, **dadurch gekennzeichnet, daß** eine Schätzung eines Frequenzoffset zwischen einem Sender einer Basissendestation und einem Empfänger einer Mobilstation auf gesendeten Pilotsymbolen und den zusätzlichen Pilotsymbolen basiert.

9. Verfahren nach einem der Ansprüche 5 bis 7, **dadurch gekennzeichnet, daß** die Schätzung eine Schätzung ist, die eine pilot- und datenunterstützte Kanalschätzung verwendet.

10. Empfänger zum Empfang von gemäß dem 3GPP-Breitband-CDMA-Standard codierten Signalen, **gekennzeichnet durch** Mittel (7, 8, 9, 10) zum Verwenden von in dem Empfangssignal enthaltenen codierten Steuersymbolen als zusätzliche Pilotsymbole.

11. Empfänger nach Anspruch 10, **dadurch gekennzeichnet, daß** der Empfänger ein Rake-Empfänger ist.

12. Empfänger nach Anspruch 10 oder 11, **gekennzeichnet durch** Mittel (8, 9, 10) zum Umcodieren decodierter Steuersymbole und zum Verwenden der umcodierten Steuersymbole als zusätzliche Pilotsymbole, wobei die Mittel einen TFCI-Codierer (8) umfassen.

**13.** Empfänger nach Anspruch 10, 11 oder 12, **dadurch gekennzeichnet, daß** die Mittel (8) zum Umcodieren decodierter Steuersymbole mit einer Kanalschätzungseinheit (10) assoziiert sind.

**14.** Computerprogramm, das dafür ausgelegt ist, das Verfahren nach einem der Ansprüche 1 bis 9 insbesondere in einem Empfänger nach einem der Ansprüche 10 bis 12 auszuführen.


**Revendications**

**1.** Procédé de réception de signaux codés conformément au standard CDMA à large bande 3GPP **caractérisé par** l'utilisation de symboles de commande codés (TFCI) contenus dans le signal reçu comme symboles pilotes supplémentaires (Pilote) pour la réception.

**2.** Procédé selon la revendication 1, **caractérisé en ce que** lesdits symboles de commande codés (TFCI) sont transmis dans le canal de commande physique dédié (DPCCH) du canal de transmission CDMA à large bande 3GPP.

**3.** Procédé selon la revendication 1 ou 2, **caractérisé en ce que** lesdits symboles de commande codés comprennent des données de l'indicateur de combinaison de format de transport (TFCI) du canal de commande physique dédié (DPCCH) du canal de transmission CDMA à large bande 3GPP.

**4.** Procédé selon l'une des revendications 1 à 3, **caractérisé en ce que** chaque bit d'indicateur de combinaison de format de transport (TFCI) transmis est codé à nouveau et utilisé comme symbole pilote supplémentaire.

**5.** Procédé selon l'une des revendications 1 à 4, **caractérisé en ce que** les bits d'indicateur de combinaison de format de transport (TFCI) sont décodés à la fin de chaque trame de canal de commande physique dédié (DPCCH) et l'indicateur de combinaison de format de transport (TFCI) transmis le plus probable est déterminé et codé à nouveau pour être utilisés comme symboles pilotes supplémentaires.

**6.** Procédé selon l'une des revendications 1 à 5, **caractérisé en ce qu'**une estimation des propriétés du canal de transmission CDMA à large bande 3GPP est basée sur des symboles pilotes transmis et lesdits symboles pilotes supplémentaires.

**7.** Procédé selon la revendication 6, **caractérisé en ce que** ladite estimation des propriétés du canal de transmission CDMA à large bande 3GPP est une estimation des propriétés du canal de données physique dédié (DPCCH).

**8.** Procédé selon l'une des revendications 1 à 7, **caractérisé en ce qu'**une estimation d'un décalage de fréquence entre un émetteur d'une station émettrice de base et un récepteur d'une station mobile est basée sur des symboles pilotes transmis et lesdits symboles pilotes supplémentaires.

**9.** Procédé selon l'une des revendications 5 à 7, **caractérisé en ce que** ladite estimation est une estimation utilisant une estimation de canal aidée par pilotes et données.

**10.** Récepteur pour la réception de signaux codés selon le standard CDMA à large bande 3GPP **caractérisé par** des moyens (7, 8, 9, 10) pour utiliser des symboles de commande codés contenus dans le signal reçu comme symboles pilotes supplémentaires.

**11.** Récepteur selon la revendication 10, **caractérisé en ce que** le récepteur est un récepteur Rake.

**12.** Récepteur selon la revendication 10 ou 11, **caractérisé par** des moyens (8, 9, 10) pour coder à nouveau des symboles de commande décodés et utiliser lesdits symboles de commande codés à nouveau comme symboles pilotes supplémentaires, lesdits moyens comprenant un codeur TFCI (8).

**13.** Récepteur selon la revendication 10, 11 ou 12, **caractérisé en ce que** lesdits moyens (8) pour coder à nouveau des symboles de commande décodés sont associés à une unité d'estimation de canal (10).

**14.** Programme informatique adapté pour exécuter le procédé selon l'une quelconque des revendications 1 à 9, spécialement dans un récepteur selon l'une quelconque des revendications 10 à 12.

Fig. 1

11

## Fig. 2

DPDCH (BPSK) → Spreader DPDCH → ⊗ ($\beta_d$) → I&Q Multiplexing → ⊕ →

DPCCH (BPSK) → Spreader DPCCH → ⊗ ($\beta_c$) → *j → ⊕

~3

1    2

## Fig. 3

| DPDCH | Data $N_{data}$ bits |
|---|---|

| DPCCH | Pilot $N_{pilot}$ bits | TFCI $N_{TFCI}$ bits | FBI $N_{FBI}$ bits | TPC $N_{TPC}$ bits |
|---|---|---|---|---|

$T_{slot} = 2560$ Chips, $10*2^k$ bits (k=0..6)

| Slot #1 | Slot #2 | ... | Slot #i | ... | Slot #15 |
|---|---|---|---|---|---|

$T_f = 10$ ms

## Fig. 4

| Symbol Rate (ksps) | Bits/ Frame | Bits/ Slot | $N_{pilot}$ | $N_{TPC}$ | $N_{TFCI}$ | $N_{FBI}$ |
|---|---|---|---|---|---|---|
| 15 | 150 | 10 | 6 | 2 | 2 | 0 |
| 15 | 150 | 10 | 8 | 2 | 0 | 0 |
| 15 | 150 | 10 | 5 | 2 | 2 | 1 |
| 15 | 150 | 10 | 7 | 2 | 0 | 1 |
| 15 | 150 | 10 | 6 | 2 | 0 | 2 |
| 15 | 150 | 10 | 5 | 1 | 2 | 2 |

# Fig. 5

EP 1 263 179 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **JOHN G. PROAKIS.** Digital Communication. Mc Graw-Hill Book Company, 1989